# EUROPEAN PATENT APPLICATION

(11) **EP 2 592 680 A1**
(43) Date of publication of application: **15.05.2013**
(21) Application number: 11803448.7
(22) Date of filing: 22.06.2011
(51) Int. Cl.: H01M 8/02, C25D 3/48, C25D 5/26, C25D 7/00, H01M 8/10

(54) **SEPARATOR MATERIAL FOR FUEL CELL, AND SEPARATOR FOR FUEL CELL AND FUEL CELL STACK EACH COMPRISING SAME**

(30) Priority: 09.07.2010 JP 2010156523
(71) Applicant: JX Nippon Mining & Metals Corporation, Tokyo 100-8164 (JP); Daido Steel Co.,Ltd., Nagoya-shi, Aichi 461-8581 (JP)
(72) Inventor: SHIBUYA Norimitsu, Hitachi-shi Ibaraki 317-0056 (JP); HISADA Tatsuo, Nagoya-shi Aichi 457-8545 (JP); HUTO Masayosi, Nagoya-shi Aichi 457-8545 (JP)
(74) Representative: Prüfer & Partner GbR European Patent Attorneys
(86) International application number: PCT/JP2011/064257
(87) International publication number: WO 2012/005112

(57) **Abstract**

A separator material for a fuel cell is provided, in which a uniform first Au-plated layer having a thickness of 0,5-4 nm is formed on one surface of a metal thin plate and a uniform second Au-plated layer having a larger thickness than that of the first Au-plated layer is formed on the other surface of the metal base material, wherein the covering rate of each of the cross-sections of the first Au-plated layer and the second Au-plated layer is 80% or more as observed on a transmission electron microscope. The separator material can have excellent corrosion resistance even when the thicknesses of the Au-plated layers formed on the surface of the base material are small, and can be produced at reduced cost. Further provided are: a separator for a fuel cell and a fuel cell stack, each of which is produced using the separator material.

## Description

### Field of the Invention

The present invention relates to a fuel cell separator material comprising a metal base and an Au plated layer formed on a surface of the metal base, and a fuel cell stack using the same.

### Description of the Related Art

A polymer electrolyte fuel cell separator has electrical conductivity, electrically connects each single cell of the fuel cell, collects energy (electricity) produced on each single cell, and has flow paths for a fuel gas and air (oxygen) that are provided to each single cell. The separator is also referred to as an interconnector, a bipolar plate or a current collector.
Traditionally, as the fuel cell separator, a carbon plate on which gas flow paths are formed has been used. However, it is undesirable in that material and processing costs are high. On the other hand, when a metal plate is used in place of the carbon plate, the metal may corroded in the electric power generation conditions such that the ions eluted therefrom are absorbed into a Membrane Electrode Assembly to undesirably decrease the electric power generation performance, or an insulated passive state film is produced on a surface of the metal such that contact resistance between a gas diffusion film and a separator is increased to undesirably decrease the electric power generation performance. To avoid this, there are known technologies that Au plating is coated in a thickness of 0.01 to 0.06 µm on a top of a corrugated separator made of a stainless steel substrate (see Patent Literatures 1 and 2) and a noble metal selected from Au, Ru, Rh, Pd, Os, Ir, Pt or the like is sputter-deposited to form an electrical conductive portion on a stainless steel substrate (see Patent Literature 3).
In addition, there are reported technologies that gold is plated in dots or island shapes in a thickness of about 10 nm (0.019 mg/cm²) on a surface of a stainless steel substrate (see Patent Literature 4) and an oxidized film is formed and gold is then plated on a surface of a stainless steel substrate (see Patent Literature 5).

### Prior Art Literature

### Patent Literature

[Patent Literature 1] Japanese Unexamined Patent Publication (Kokai) Hei 10-228914
[Patent Literature 2] Japanese Unexamined Patent Publication (Kokai) Hei 9-22708
[Patent Literature 3] Japanese Unexamined Patent Publication (Kokai) 2001-297777
[Patent Literature 4] Japanese Unexamined Patent Publication (Kokai) 2004-296381 (0007)
[Patent Literature 5] Japanese Unexamined Patent Publication (Kokai) 2007-257883

### Summary of the Invention

### Problems to be solved by the Invention

However, when the thickness of the gold plating is less than 20 nm in order to decrease costs, coating defects may be easily introduced, and the corrosion resistance of the fuel cell separator cannot be fully provided. Especially, the fuel cell separator is in a severe environment in terms of the corrosion resistance, since it is disposed under acidic atmosphere.
In addition, in the technology described in Patent Literature 4, to prevent contact corrosion between dissimilar metals, i.e., between stainless steel and gold, a spontaneous potential of the stainless steel alone is set to 0.48 V to sulfuric acid having a pH of 3 at 90 °C to limit the weight of gold to 1.76 mg/cm² or less. Accordingly, the gold plated film is purposely formed not uniform in the island shapes. In general, when the thin metal plate made of stainless steel or the like is exposed in a large area, a large amount of the ions are eluted from the thin plate to undesirably decrease the electric power generation performance.
In other words, an object of the present invention is to provide a fuel cell separator material and a fuel cell stack using the same having excellent corrosion resistance, even if an Au plated layer formed on a surface of a thin metal base is thin, and available at lower costs. In a bipolar type separator having two formed separator materials adhered where a fuel gas flows through one material, an oxidizing gas flows through the other material, and cooling water flows through a middle adhered part, corrosion resistance needed at the gas sides and corrosion resistance needed at the cooling water side are different. Another object of the present invention is to provide a fuel cell separator material and a fuel cell stack using the same having a minimal gold film on a surface of a thin metal substrate available at lower costs.

### Means for Solving the Problems

The present invention provides a fuel cell separator material, comprising a thin metal substrate, a first Au plated layer having a thickness of 0.5 to 4 nm formed on one surface of the thin metal substrate, and a uniform second Au plated layer which is thicker than the first Au plated layer formed on the other surface of the thin metal substrate, wherein coverage of the section of the first Au plated layer and coverage of the section of the second Au plated layer observed by a transmission electron microscope are 80% or more.

Preferably, the first Au plated layer and the second Au plated layer are electroplated using an Au plating bath having a pH of 1.0 or less and containing sodium bisulfate as a conductive salt.
Preferably, the second Au plated layer has a thickness of 7 nm or more.
Preferably, the first Au plated layer and the second Au plated layer are wet electroplated on both sides of the thin metal substrate using opposing electrodes by flowing different currents on the both sides.
Preferably, the first Au plated layer and the second Au plated layer are formed on parts of the surface of the thin metal substrate.

Preferably, the thin metal substrate comprises stainless steel, and the stainless steel is austenitic stainless steel.
Preferably, the thin metal substrate has a thickness of 0.05 to 0.3 mm.
Preferably, the Au plated layer is seal-treated.
Preferably, the sealing treatment is conducted by subjecting to electrolytic treatment of the Au plated layer in a mercapto-based solution.
Preferably, the fuel cell separator material of the present invention may be used in a polymer electrolyte fuel cell or a direct methanol fuel cell.

A fuel cell separator of the present invention uses the separator material, wherein the second Au plated layer is faced to air electrode and fuel electrode sides.
A fuel cell stack of the present invention uses the fuel cell separator material, wherein the second Au plated layer is faced to air electrode and fuel electrode sides.

### Effect of the Invention

According to the present invention, corrosion resistance can be improved and costs can be decreased, even if an Au plated layer formed on a surface of a metal base is thin.

### Brief Description of the Drawings

Fig. 1 is a TEM image of a section of a first Au plated layer;
Fig. 2 is a schematic diagram of gold coverage (TEM image) on a thin metal substrate;
Fig. 3 is a section view of a fuel cell stack (single cell) according to an embodiment of the present invention;
Fig. 4 is a section view of a bipolar type separator;
Fig. 5 is a section view of a flat type fuel cell stack according to an embodiment of the present invention; and
Fig. 6 is a graph showing a time versus an output voltage when an electric power generation test on a single cell using a fuel cell separator material.

### Description of the Embodiments

Embodiments of the fuel cell separator material according to the embodiments of the present invention will be described below. The symbol "%" herein refers to % by mass, unless otherwise specified.
The term "fuel cell separator" herein refers to a fuel cell separator which has electrical conductivity, connects each single cell electrically, collects energy (electricity) produced on each single cell, and has flow paths for a fuel gas(fuel liquid) or air (oxygen) that is provided to each single cell. The separator is also referred to as an interconnector, a bipolar plate and a current collector.
Accordingly, the fuel cell separator includes a separator having concave-convex flow paths formed on a surface of a plate-like base, as well as a separator having flow paths with open holes for a gas or methanol formed on a surface of a plate-like base, such as the above-mentioned passive type DMFC separator, which will be described below for detail.

### <Thin metal substrate>

The fuel cell separator material requires corrosion resistance and conductivity, and the base (thin metal substrate) requires corrosion resistance. For the thin metal substrate, stainless steel having good corrosion resistance and available at relatively low costs is preferably used. More preferably, austenitic stainless steel is used.
Types of the austenitic stainless steel are not especially limited, but include SUS 304, SUS 316L and SUS 301 in compliance with JIS standard.
The shape of the thin metal substrate is also not especially limited so long as Au can be plated. However, since the thin metal substrate is press-formed to have the separator shape, the shape is preferably a plate. Specifically, the substrate has preferably a thickness of 0.05 to 0.3 mm. If the thickness of the thin metal substrate is less than 0.05 mm, the separator may have lower stiffness after formed and deform when the fuel cell stack is assembled, assembly man-hour may be increased, and separator losses may be increased. On the other hand, if the thin metal substrate is thicker, the separator has improved stiffness, but if the thickness exceeds 0.3 mm, the stiffness needed for the separator may not be further improved and the weight of the stack may be increased.

From the standpoint of forming the Au plated layer smoothly, the surface of the thin metal substrate may be smoothed and cleaned.
In order to smooth the surface of the thin metal substrate, finish rolling may be conducted using a roll having, for example, a roll surface roughness Ra of <= 0.05 µm. In order to clean, finish annealing may be bright annealing. In addition, although a feed roll in an annealing furnace is generally a carbon roll, the concern is that carbon is adhered to the thin substrate from the carbon roll upon annealing. Therefore a ceramic roll may be used. To avoid oxidation of the surface of the thin substrate, the furnace atmosphere may include hydrogen and nitrogen at a ratio, for example, of 9:1.

### <First Au plated layer>

According to the present invention, the Au plated layers are formed on both surfaces of the thin metal substrate. Of these, a first Au plated layer is a uniform layer having a thickness of 0.5 to 4 nm.
A plane exposed to the electric power generation conditions (at air electrode and fuel electrode sides) of the fuel cell separator is significantly corroded, and therefore is plated with corrosion resistant gold. However, it has been found that corrosion proceeds gradually at a plane opposite to the plane at the air electrode and fuel electrode sides in the fuel cell separator. A cooling medium (tap water or the like) for reducing, for example, heat of reaction flows through the opposite plane.
Through the study to find the thinnest Au plated thickness needed to prevent the gradual corrosion at the cooling medium side by the present inventors, it is found that the uniform layer having a thickness of 0.5 nm or more may work well. The first Au plated layer has a thickness of 0.5 nm or more from the standpoint of corrosion resistance and of not greater than 4 nm from the standpoint of costs. If the thickness of the first Au plated layer exceeds 4 nm, the above-mentioned gradual corrosion may not be further prevented.

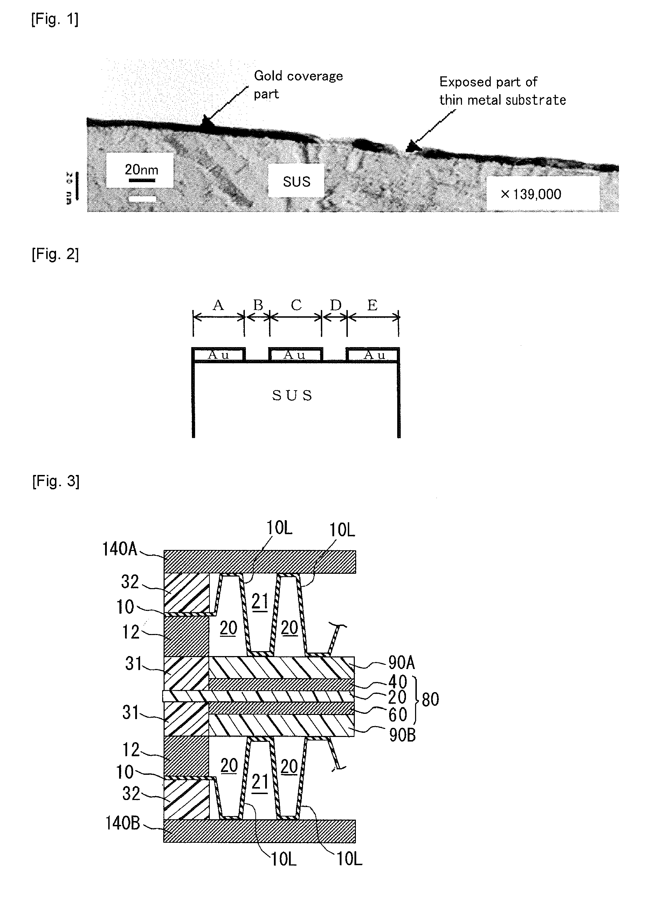

If the thickness of the first Au plated layer is as thin as 4 nm or less, the Au plated layer may have a dot or island shape such that the thin metal substrate is exposed largely. In general, when the thin metal substrate made of stainless steel is exposed in a large area, a large amount of the ions are eluted from the thin substrate of stainless steel to undesirably decrease the electric power generation performance. Thus, the first Au plated layer should be formed uniformly.
The thicknesses of the first Au plated layer and a second Au plated layer described later can be calculated by an electrolytic method, a fluorescent X-rays film thickness meter, and a TEM (transmission electron microscope) image from the sections. As the fluorescent X-rays film thickness meter, SEA5100 manufactured by SII NanoTechnology Inc. can be used, for example. Fig. 1 shows a TEM image (magnification is 139000) of a section of the first Au plated layer in Example 1.

Herein, the fact that the first Au plated layer and the second Au plated layer described later are "uniform" can be determined by observing the section of the plated layers with TEM (transmission electron microscope) (magnification is 100000x or more, generally 139000x). Specifically, when a gold coverage represented by (area of thin metal substrate, which is a base, is not exposed)/(total measurement area) is 80% or more in the TEM image of the section of the plated layers, the Au plated layers are found to be "uniform".
When the gold coverage on the thin metal substrate (TEM image) is schematically shown in Fig. 2, the exposed parts of the thin metal substrate are areas B and D, and the unexposed parts of the thin metal substrate are areas A, C and E. Thus, in the TEM image, total lengths of the areas A, C and E in a horizontal direction (A+C+E) are considered as the area of the unexposed parts of the thin metal substrate, and total lengths of the total measurement areas (A+B+C+D+E) are considered as the total measurement areas. The gold coverage can be calculated by {(A+C+E)/(A+B+C+D+E)}x100 (%).

A method of forming the first Au plated layer uniformly includes electroplating using an Au plating bath having a pH of 1.0 or less and containing sodium bisulfate as a conductive salt. In this case, the composition of the Au plated bath comprises an Au salt, sodium bisulfate and other additives as appropriate. As the Au salt, a gold cyanide salt, a non-cyan-based metal salt (such as gold chloride) and the like can be used. The gold concentration in the Au salt can be about 1 to 100 g/L. The concentration of sodium bisulfate can be about 50 to 100 g/L.
When an acidic Au plating bath having a pH of 1.0 or less is used and stainless steel is used as the thin metal substrate, a Cr oxidized film on the surface is easily removed, and adhesion of the Au plated layer can be improved. In addition, a large amount of hydrogen is produced upon plating to activate the stainless steel surface, whereby Au is easily electrodeposited.
Also, it is preferred that the acidic Au plating bath be used, and Au be directly plated on the surface of the thin metal substrate such as stainless steel. Conventionally, as to a connector material, the base is Ni underplated and the Au is then plated. Ni is corroded in the electric power generation conditions. So, Au is desirably plated directly on the base without Ni underplating.

The Au plating conditions will be described. When the current density is low, a current is concentrated on a convex part of the metal base, so that the plated layer is difficult to be uniform. When the temperature of the plating bath is low, the plated layer may be difficult to be uniform.
The concentration of gold in the plating liquid is preferably 1 to 4 g/L, more preferably 1.3 to 1.7 g/L. When the concentration of gold is less than 1 g/L, current efficiency is decreased, so that the plated layer may be difficult to be uniform.

From the standpoint of saving gold, it is possible to form the first Au plated layer and the second Au plated layer described layer on only the part requiring electrical conductivity, e.g., the part contacted with the electrodes when a fuel cell separator is formed from the fuel cell separator material.

### <Second Au plated layer>

The second Au plated layer is formed on the thin metal substrate at an opposite side of the first Au plated layer. The second Au plated layer is uniform and thicker than the first Au plated layer.
In the fuel cell separator, the planes at air electrode and fuel electrode sides are exposed to the electric power generation conditions, and are significantly corroded. Therefore, the thicker Au than the first Au plated layer should be plated.
The second Au plated layer should be thicker than the first Au plated layer. For example, the thickness is 5 nm or more, preferably 7 nm or more from the standpoint of corrosion resistance. On the other hand, the second Au plated layer has preferably a thickness of 40 nm or less from the standpoint of costs. If the thickness of the second Au plated layer exceeds 40 nm, the corrosion may not be further prevented.
Also, when the second Au plated layer is uniform, the part where the thin metal substrate is exposed by a dot or island shape in the Au plated layer can be decreased. In particular, the amount of the ions eluted from the thin substrate made of stainless steel can be decreased.

A method of forming the first Au plated layer and the second Au plated layer on both surfaces of the thin metal film is not especially limited, but wet electroplating for flowing different currents on the both sides (the second Au plated layer has a higher current value than the first Au plated layer) is desirable.

### <Sealing treatment>

The Au plated layer is preferably seal-treated. If the coating defects are introduced to the Au plated layer, the sealing treatment can fill the defects and maintain the corrosion resistance. A variety of methods of seal-treating the Au plating are known. Preferably, the Au plated layer is subjected to electrolytic treatment in a mercapto-based solution. The mercapto-based solution is obtained by dissolving a compound having a mercapto group in water. The compound having a mercapto group includes a mercapto benzothiazole derivative described in Japanese Unexamined Patent Publication (Kokai) 2004-265695.

### <Fuel cell separator>

Then, the fuel cell separator made with the fuel cell separator material according to the present invention will be described below. The fuel cell separator is made by working the above-mentioned fuel cell separator material into the predetermined shape, and comprises reaction gas flow paths or reaction liquid flow paths (channels or openings) for flowing a fuel gas (hydrogen), a fuel liquid (methanol), air (oxygen), cooling water and the like.
In the above-mentioned fuel cell separator material, the second Au plated layer is faced to air electrode and fuel electrode sides.

### <Layered type (active type) fuel cell separator>

Fig. 3 shows a section of a single cell of the layered type (active type) fuel cell. In Fig. 3, current collector plates 140A and 140B are disposed outside of a separator 10 as described later. Generally, when the single cells are layered to form a stack, only a pair of the current collector plates is disposed only on both ends of the stack.
The separator 10 has electrical conductivity, contacts with MEA as described later to collect current, and electrically connects respective single cells. In addition, as described later, the separator 10 has channels as flow paths for flowing a fuel gas and air (oxygen).

In Fig. 3, Membrane Electrode Assembly (MEA) 80 is made by laminating an anode electrode 40 and a cathode electrode 60 on both sides of a polymer electrolyte membrane 20. On the surfaces of the anode electrode 40 and the cathode electrode 60, an anode side gas diffusion layer 90A and a cathode side gas diffusion layer 90B are laminated, respectively. The Membrane Electrode Assembly herein may be a laminate including the gas diffusion layers 90A and 90B.

On both sides of the MEA 80, separators 10 are disposed facing to the gas diffusion layers 90A and 90b, and sandwich the MEA 80. Flow paths 10L are formed on the surfaces of the separators 10 at the sides of the MEA 80, and gas can enter and exit into/from an internal spaces 20 surrounded by gaskets 12, the flow paths 10L and the gas diffusion layer 90A (or 90B) as described later.
A fuel gas (hydrogen or the like) flows into the internal spaces 20 at the anode electrode 40, and an oxidizing gas (oxygen, air or the like) flows into the internal spaces 20 at the cathode electrode 60 to undergo electrochemical reaction.

The outside peripherals of the anode electrode 40 and the gas diffusion layer 90A are surrounded by a frame-like seal member 31 having the almost same thickness as the total thickness of the anode electrode 40 and the gas diffusion layer 90A. A substantially frame-like gasket 12 is inserted between the seal member 31 and the peripheral of the separator 10 such that the separator is contacted with the gasket 12 and the flow paths 10L are surrounded by the gasket 12. The current collector plate 140A (or 140B) is laminated on the outer surface (opposite surface of the MEA 80 side) of the separator 10, and a substantially frame-like seal member 32 is inserted between the current collector plate 140A (or 140B) and the peripheral of the separator 10.
The seal member 31 and the gasket 12 form a seal to prevent the fuel gas or the oxidizing gas from leaking outside the cell. When a plurality of the single cells are laminated to form a stack, a gas flows into a space 21 between the outside of the separator 10 and the current collector plate 140A (or 140B); the gas being different from that flowing into the space 20. (When the oxidizing gas flows into the space 20, hydrogen flows into the space 21.) Therefore, the seal member 32 is also used as the member for preventing the gas from leaking outside the cell.

The fuel cell includes the MEA 80 (and the gas diffusion layers 90A and 90B), the separator 10, the gasket 12 and the current collectors 140A and 140B. A plurality of the fuel cells are laminated to form a fuel cell stack.

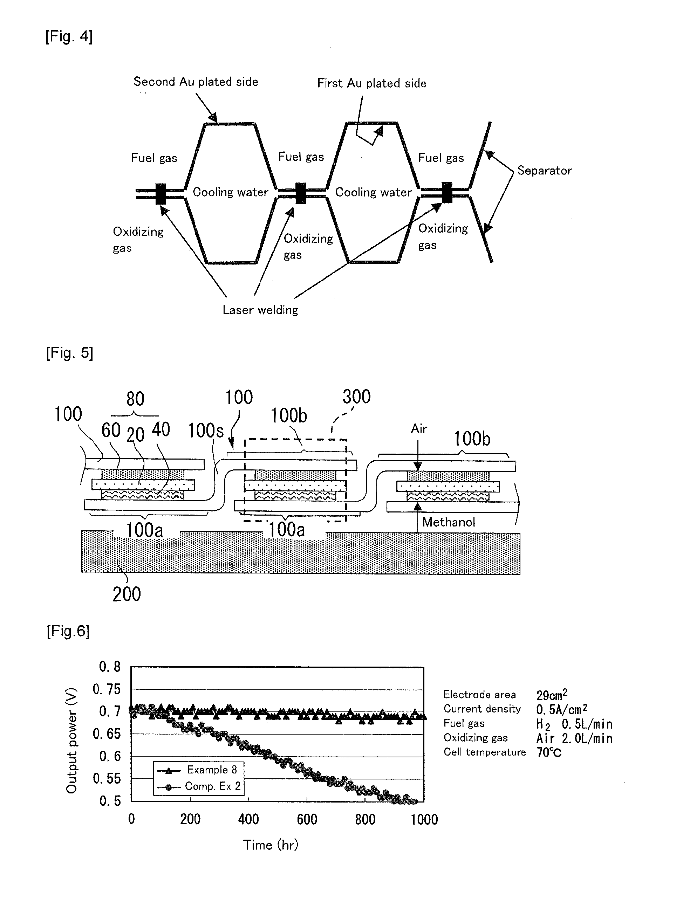

As shown in Figs. 3 and 4, the bipolar type separator has a structure that contact portions of two formed separator materials are adhered by laser welding or the like, a fuel gas flows through one material and an oxidizing gas flows through the other material, and cooling water flows through a middle adhered part.

The layered type (active type) fuel cell shown in Fig. 3 can be applied not only to the above-mentioned fuel cell using hydrogen as the fuel, but also to the DMFC using methanol as the fuel.

### <Flat type (passive type) fuel cell separator>

Fig. 5 shows a section of a single cell of the flat type (passive type) fuel cell. In Fig. 5, current collector plates 140 are disposed outside of a separator 100, respectively. Generally, when the single cells are layered to form a stack, a pair of the current collector plates is disposed only on both ends of the stack.
In Fig. 5, the structure of the MEA 80 is the same as that in Fig. 3, so the same components are designated by the same symbols and the descriptions thereof are omitted. (In Fig. 5, the gas diffusion layers 90A and 90B are omitted, but there may be the gas diffusion layers 90A and 90B.)

In Fig. 5, the separator 100 has electrical conductivity, collects electricity upon contact with the MEA, and electrically connects each single cell. As described later, holes are formed on the separator 100 for flowing a fuel liquid and air (oxygen).
The separator 100 has a stair 100s roughly on the center of an elongated tabular base so as to make a section crank shape, and includes an upper piece 100b disposed upper via the stair 100s and a lower piece 100a disposed below via the stair 100s. The stair 100s extends vertically in the longitudinal direction of the separator 100.
A plurality of the separators 100 are arranged in the longitudinal direction, spaces are provided between the lower pieces 100a and the upper pieces 100b of the abutted separators 100, and the MEAs 80 are inserted into the spaces. The structure that the MEA 80 is sandwiched between two separators 100 constitutes a single cell 300. In this way, a stack that a plurality of the MEAs 80 are connected in series via the separators 100 is provided.

The flat type (passive type) fuel cell shown in Fig.5 can be applied not only to the above-mentioned DMFC using methanol as the fuel, but also to the fuel cell using hydrogen as the fuel. The shape and the number of the openings of the flat type (passive type) fuel cell separator are not limited, the openings may be not only holes but also slits, or the whole separator may be a net.

### <Fuel cell stack>

The fuel cell stack of the present invention is obtained by using the fuel cell separator material of the present invention.
The fuel cell stack has a plurality of cells connected in series where electrolyte is sandwiched between a pair of electrodes. The fuel cell separator is inserted between the cells to block the fuel gas or air. The electrode contacted with the fuel gas (H₂) is a fuel electrode (anode), and the electrode contacted with air (O₂) is an air electrode (cathode).
Non-limiting examples of the fuel cell stack have been described referring to Figs. 3 and 5.

### [Example]

### <Sample preparation>

For preparation, in order to smooth each thin metal substrate shown in Table 1 and Table 2, finish rolling was conducted using a roll having a roll surface roughness Ra = 0.03 µm, and then bright annealing for cleaning was conducted . In addition, a feed roll in an annealing furnace was a ceramic roll, the furnace atmosphere included hydrogen and nitrogen at a ratio of 9:1.
Each thin metal substrate thus prepared was electrolytically degreased using a commercially available degreasing liquid Pakuna 105, and then pretreated by acid pickling in a sulfuric acid solution having a pH of 0.5.
Then, the following Au plating bath was used to directly plate each acid pickled thin metal substrate with Au. Iridium oxide electrodes were disposed opposingly on both surfaces of the thin metal substrate. By flowing different currents through each iridium oxide electrode, different currents flowed through both surfaces of the thin metal substrate. (The second Au plated layer had a higher current value than the first Au plated layer.) Au plated layers having thicknesses shown in Tables 1 and 2 were electroplated on respective surfaces of the thin metal substrate. Thus, each fuel cell separator material was produced.
The Au plating liquid (cyan-based) contained a gold cyanide salt (gold concentration: 1.5 g/L) and sodium bisulfate 70g/L and had a pH of 0.9.

In each fuel cell separator material shown in Table 1, the Au plated layer was formed on an entire surface of each thin metal substrate. On the other hand, in each fuel cell separator material shown in Table 2, the Au plated layer was formed only on a part corresponding to an active area upon power generation of the thin metal substrate. Accordingly, each fuel cell separator material shown in Table 2 was evaluated by cutting out the part on which the Au plated layer was formed.
Uniformity and corrosion resistance of the film of the fuel cell separator material thus produced were measured as follows:

### <Film uniformity>

The section of the sample was observed by TEM (transmission electron microscope) for determination (139000 times). When a gold coverage covering the base is 80% or more, the Au plated layers was "uniform". Specifically, in the TEM image of the section of the sample, total lengths L1 of the area of the unexposed parts of the thin metal plate in a horizontal direction were considered as the area of the unexposed parts of the thin metal plate, and total lengths L2 of the total measurement areas were considered as the total measurement areas. The gold coverage was calculated by (L1/L2)x100 (%).

### <Corrosion resistance at the first Au plated layer>

On the assumption that corrosion environment at the cooling water side of the polymer electrolyte fuel cell upon power generation, the following acceleration test was conducted. 600 ml of a 10 wt ppm chlorine solution having a pH of 5 at 90°C was used. The pH was adjusted with sulfuric acid, and the chlorine concentration was adjusted with sodium chloride. Each fuel cell separator material was cut out to a size of 40 mm x 50 mm, was immersed in the above-described chlorine solution for 168 hours, and was pulled up. Then, Fe, Ni and Cr ions in the solution were quantified by an ICP analysis to measure the metal eluted amounts.

### <Corrosion resistance of the second Au plated layer>

Based on the corrosion environment of the polymer electrolyte fuel cell upon power generation, the following acceleration test was conducted. Each fuel cell separator material was cut out to a size of 40 mm x 50 mm, was immersed in a 600 ml of a sulfuric acid solution having a pH of 1 at 95°C for 168 hours, and was pulled up. Then, Fe, Ni and Cr ions in the solution were quantified by the ICP analysis to measure the metal eluted amounts.

### <Contact resistance>

A contact resistance distribution of each Au plated layer was measured using an electric contact simulator (CRS-1 manufactured by Yamazaki Seiki Co., Ltd.) at a voltage range of 200 mV in a measurement mode of under a constant load of 10 gf for a measurement length of 1 mm. A sampling number is 600, and its average value was used as a contact resistance value.

A typical property needed for the fuel cell separators is corrosion resistance under the usage environment (no toxic metal ion elution). Specifically, the corrosion resistance of the first Au plated layer and the second Au plated layer is such that the metal ion eluted amount is desirable 0.05 mg/L or less. If the corrosion resistance of the first Au plated layer exceeds 0.05 mg/L, the eluted metal ions leak to cooling water (the elution of the metal ions increases electrical conductivity of cooling water, whereby a current flows through water), and if the corrosion resistance of the second Au plated layer exceeds 0.05 mg/L, the eluted metal ions are absorbed into the membrane electrode assembly, both of which decrease the electric power generation performance.

### <Appropriate thickness of the thin metal substrate>

As shown in Table 3, using a stainless steel thin metal substrate having a thickness of 0.03 to 0.3 mm, a separator having a width of 100 mm and a length of 500 mm (a channel shape: a pitch of 2.5 mm, a straight channel having a depth of 0.5 mm) was press-formed. On the assumption of a continuous assembly line for mass-produced fuel cells, a time needed to move 100 separators formed from right to left by hand one by one a distance of 1 m, and deformation (bent, warped) of the separators at the time of the movement were visually determined. The separators were moved carefully in order to prevent the deformation as low as possible. Percentages of unavoidable bent separators were calculated.
The results are shown in Tables 1 to 3.

**[Table 1]**

| | Type of thin metal substrate | | Substrate thickness (mm) | Sealing treatment | First Au plated layer | | Second Au plated layer | | Metal eluted amount (mg/L) | | Contact resistance (mΩ) | |
|---|---|---|---|---|---|---|---|---|---|---|---|---|
| | Type | Material type | | | Thickness (nm) | Form of film | Thickness (nm) | Form of film | First Au plated layer | Second Au plated layer | First Au plated layer | Second Au plated layer |
| Example. 1 | Ni base alloy | INC0L0Y825 | 0.10 | Mercapto-based | 0.5 | Uniform | 10 | Uniform | 0.01 | 0.01 | 22.0 | 8.5 |
| Example. 2 | Ni base alloy | INC0NEL625 | 0.15 | Mercapto-based | 1.0 | Uniform | 20 | Uniform | 0.01 | 0.01 | 20.5 | 7.9 |
| Example. 3 | Austenitic | SUS316L | 0.10 | Mercapto-based | 1.0 | Uniform | 5 | Uniform | 0.01 | 0.03 | 19.0 | 8.8 |
| Example. 4 | Austenitic | SUS316L | 0.10 | Mercapto-based | 0.5 | Uniform | 7 | Uniform | 0.01 | 0.02 | 20.5 | 8.5 |
| Example. 5 | Austenitic | SUS316L | 0.10 | Mo-based | 2.0 | Uniform | 7 | Uniform | 0.01 | 0.02 | 20.3 | 9.0 |
| Example. 6 | Austenitic | SUS316L | 0.10 | Mercapto-based | 4.0 | Uniform | 7 | Uniform | 0.01 | 0.01 | 20.5 | 8.9 |
| Example. 7 | Austenitic | SUS316L | 0.20 | Mercapto-based | 0.5 | Uniform | 10 | Uniform | 0.01 | 0.01 | 20.1 | 8.2 |
| Example. 8 | Austenitic | SUS316L | 0.10 | Mercapto-based | 1.0 | Uniform | 10 | Uniform | 0.01 | 0.01 | 20.2 | 9.0 |
| Example. 9 | Austenitic | SUS316L | 0.10 | Mo-based | 0.5 | Uniform | 20 | Uniform | 0.01 | 0.01 | 22.5 | 8.5 |
| Example. 10 | Austenitic | SUS316L | 0.10 | Mercapto-based | 3.0 | Uniform | 20 | Uniform | 0.01 | 0.01 | 21.2 | 8.9 |
| Example. 11 | Austenitic | SUS316L | 0.10 | Mercapto-based | 0.5 | Uniform | 40 | Uniform | 0.01 | 0.01 | 19.0 | 8.2 |
| Example. 12 | Austenitic | SUS316L | 0.10 | None | 0.5 | Uniform | 10 | Uniform | 0.03 | 0.01 | 20.2 | 9.0 |
| Example. 13 | Austenitic | SUS316L | 0.30 | None | 3.0 | Uniform | 20 | Uniform | 0.02 | 0.01 | 20.2 | 9.0 |
| Example. 14 | Austenitic | SUS304 | 0.10 | Mercapto-based | 0.5 | Uniform | 10 | Uniform | 0.01 | 0.01 | 20.2 | 7.9 |
| Example. 15 | Austenitic | SUS304 | 0.10 | Mercapto-based | 3.0 | Uniform | 15 | Uniform | 0.01 | 0.01 | 21.2 | 8.9 |
| Example. 16 | Austenitic | SUS304 | 0.10 | Mercapto-based | 2.0 | Uniform | 20 | Uniform | 0.01 | 0.01 | 21.5 | 8.9 |
| Example. 7 | Austenitic | SUS304 | 0.10 | None | 1.0 | Uniform | 15 | Uniform | 0.03 | 0.01 | 21.5 | 7.9 |
| Example. 18 | Austenitic | SUS301 | 0.07 | Mercapto-based | 0.5 | Uniform | 7 | Uniform | 0.01 | 0.02 | 21.5 | 8.9 |
| Example. 19 | Austenitic | SUS301 | 0.10 | Mercapto-based | 2.0 | Uniform | 10 | Uniform | 0.01 | 0.01 | 21.2 | 8.9 |
| Example. 20 | Austenitic | SUS301 | 0.10 | Mo-based | 3.0 | Uniform | 20 | Uniform | 0.01 | 0.01 | 20.2 | 8.2 |
| Example. 21 | Austenitic | SUS301 | 0.10 | None | 1.0 | Uniform | 15 | Uniform | 0.03 | 0.01 | 20.3 | 8.9 |
| Example. 22 | Ferritic | SUS430 | 0.10 | Mercapto-based | 0.5 | Uniform | 7 | Uniform | 0.02 | 0.02 | 21.2 | 8.2 |
| Example. 23 | Ferritic | SUS430 | 0.05 | Mercapto-based | 1.0 | Uniform | 20 | Uniform | 0.03 | 0.01 | 20.3 | 8.9 |
| Example. 24 | Ferritic | SUS430 | 0.10 | None | 2.0 | Uniform | 10 | Uniform | 0.04 | 0.03 | 20.3 | 8.2 |
| Comp. Example. 1 | Austenitic | SUS316L | 0.10 | Mercapto-based | 0.0 | - | 0 | - | 1.88 | 305 | 20000 or more | 9.0 |
| Comp. Example. 2 | Austenitic | SUS316L | 0.20 | Mercapto-based | 0.2 | Uniform | 7 | Uniform | 1.22 | 0.02 | 80.5 | 7.9 |
| Comp. Example. 3 | Austenitic | SUS316L | 0.10 | None | 0.0 | - | 10 | Uniform | 1.75 | 0. 03 | 20000 or more | 8.2 |
| Comp. Example. 4 | Austenitic | SUS316L | 0.10 | Mo-based | 0.0 | - | 40 | Uniform | 1.56 | 0.01 | 20000 or more | 8.9 |
| Comp. Example. 5 | Austenitic | SUS316L | 0.10 | Mercapto-based | 0.5 | Ununiform | 7 | Uniform | 0.33 | 0.02 | 70.8 | 9.0 |
| Comp. Example. 6 | Austenitic | SUS301 | 0.10 | Mercapto-based | 0.0 | - | 7 | Uniform | 1.78 | 0.02 | 20000 or more | 8.9 |
| Comp. Example. 7 | Austenitic | SUS301 | 0.07 | None | 0.3 | Uniform | 10 | Uniform | 0.98 | 0.02 | 70.5 | 7.9 |
| Comp. Example. 8 | Austenitic | SUS301 | 0.10 | Mercapto-based | 0.0 | - | 20 | Uniform | 1.86 | 0.01 | 20000 or more | 7.9 |
| Comp. Example. 9 | Ferritic | SUS430 | 0.10 | None | 1.0 | Ununiform | 15 | Uniform | 0.12 | 0.02 | 75.8 | 8.9 |

**[Table 2]**

| | Type of thin metal substrate | | Substrate thickness (mm) | Sealing treatment | First Au plated layer | | Second Au plated layer | | Metal eluted amount (mg/L) | | Contact resistance (mΩ) | |
|---|---|---|---|---|---|---|---|---|---|---|---|---|
| | Type | Steel type | | | Thickness (nm) | Form of film | Thickness (nm) | Form of film | First Au plated layer | Second Au plated layer | First Au plated layer | Second Au plated layer |
| Example. 25 | Austenitic | SUS316L | 0.30 | None | 0.5 | Uniform | 7 | Uniform | 0.02 | 0.2 | 21.5 | 8.5 |
| Example. 26 | Austenitic | SUS316L | 0.10 | Mercapto-based | 2.0 | Uniform | 10 | Uniform | 0.02 | 0.01 | 21.5 | 8.9 |
| Example. 27 | Austenitic | SUS304 | 0.10 | Mercapto-based | 4.0 | Uniform | 40 | Uniform | 0.01 | 0.01 | 22.5 | 9.0 |
| Example. 28 | Austenitic | SUS301 | 0.10 | Mercapto-based | 3.0 | Uniform | 10 | Uniform | 0.01 | 0.01 | 20.5 | 9.0 |
| Example.29 | Ferritic | SUS430 | 0.05 | Mo-based | 1.0 | Uniform | 20 | Uniform | 0.03 | 0.01 | 21.5 | 8.9 |
| Comp. Example. 10 | Austenitic | SUS316L | 0.20 | Mercapto-based | 0.2 | Uniform | 7 | Uniform | 1.24 | 0.02 | 76.2 | 8.9 |
| Comp. Example. 11 | Ferritic | SUS430 | 0.05 | Mercapto-based | 1. 0 | Ununiform | 20 | Uniform | 1.45 | 0.01 | 85.5 | 8.9 |

**[Table 3]**

| Type of thin metal substrate | Substrate thickness (mm) | Processing time (min) | Percentage of bent separators(%) | Remarks |
|---|---|---|---|---|
| SUS316L | 0.03 | 50 | 30 | Comparative Example |
| | 0.05 | 16 | 0 | Example |
| | 0.1 | 13 | 0 | Example |
| | 0.3 | 10 | 0 | Example |
| SUS301 | 0.03 | 45 | 25 | Comparative Example |
| | 0.05 | 15 | 0 | Example |
| | 0.1 | 13 | 0 | Example |
| | 0.3 | 10 | 0 | Example |

As shown in Table 1 and Table 2, in each Example where the uniform first Au plated layer having a thickness of 0.5 nm or more was formed on one surface (front surface) of the thin metal substrate, and the uniform second Au plated layer thicker than the first Au plated layer is formed on the other surface (back surface), the metal eluted amount was low, and the corrosion resistance was excellent.
Also, in each Example, the gold film exists, such that the contact resistance was significantly small (50 mΩ or less). In general, the bipolar separator is assembled by laser welding or the like. The welded parts become electrical paths. In addition, the separator material of each Example had low surface resistance, such that electricity flowed very well. Thus, the performance of the fuel cell was improved.

On the other hand, in each Comparative Example 1, 3, 4, 6 or 8 where no first Au plated layer was formed on one surface (front surface) of the thin metal substrate, the metal eluted amount was high, and the corrosion resistance was poor.
In each Comparative Example 2, 7 or 10, where the thickness of the first Au plated layer formed on one surface (front surface) of the thin metal substrate was less than 0.5 nm, the metal eluted amount was high, and the corrosion resistance was poor.
In each Comparative Example 5, 9 or 11, where the first Au plated layer was formed not uniformly, the metal eluted amount was high, and the corrosion resistance was poor. Comparative Examples 5, 9 and 11 were produced by reference to Examples in Patent Literature 4.

As shown in Table 3, in each Example where the thin metal substrate having a thickness of 0.05 mm or more was used, the percentage of the bent separators produced by assembling the fuel cell was 0. So, the work time needed to assemble could be shortened.

Then, each separator material of Example 8 and Comparative Example 2 was formed into a separator. Then, a single cell shown in Fig. 3 was produced. An electric power generation test was conducted on the single cell. Fig. 6 shows the test conditions, and an output voltage vs. a time. The cell made by the separator material of Example 8 generated power stably for 1000 hrs. In contrast, the cell made by the separator material of Comparative Example 2 had decreasing output voltage (electric power generation performance) as time elapsed.

### [Description of Reference Numerals]

| | |
|---|---|
| 10, 100 | Separator |
| 12, 12B | Gasket |
| 20 | polymer electrolyte |
| 40 | Anode electrode |
| 60 | Cathode electrode |
| 80 | Membrane Electrode Assembly (MEA) |

## Claims

1. A fuel cell separator material, comprising a thin metal substrate, a first Au plated layer having a thickness of 0.5 to 4 nm formed on one surface of the thin metal substrate, and a uniform second Au plated layer which is thicker than the first Au plated layer formed on the other surface of the thin metal substrate, wherein coverage of the section of the first Au plated layer and coverage of the section of the second Au plated layer observed by a transmission electron microscope are 80% or more.

2. The fuel cell separator material according to Claim 1, wherein the first Au plated layer and the second Au plated layer are electroplated using an Au plating bath having a pH of 1.0 or less and containing sodium bisulfate as a conductive salt.

3. The fuel cell separator material according to Claim 1 or 2, wherein the second Au plated layer has a thickness of 7 nm or more.

4. The fuel cell separator material according to any one of Claims 1 to 3, wherein the first Au plated layer and the second Au plated layer are wet electroplated on both sides of the thin metal substrate using opposing electrodes by flowing different currents on the both sides.

5. The fuel cell separator material according to any one of Claims 1 to 4, wherein the first Au plated layer and the second Au plated layer are formed on parts of the surface of the thin metal substrate.

6. The fuel cell separator material according to any one of Claims 1 to 5, wherein the thin metal substrate comprises stainless steel.

7. The fuel cell separator material according to Claim 6, wherein the stainless steel is austenitic stainless steel.

8. The fuel cell separator material according to any one of Claims 1 to 7, wherein the thin metal substrate has a thickness of 0.05 to 0.3 mm.

9. The fuel cell separator material according to any one of Claims 1 to 8, wherein the Au plated layer is seal-treated.

10. The fuel cell separator material according to Claim 9, wherein the sealing treatment is conducted by subjecting to electrolytic treatment of the Au plated layer in a mercapto-based solution.

11. The fuel cell separator material according to any one of Claims 1 to 10 for use in a polymer electrolyte fuel cell.

12. The fuel cell separator material according to Claim 11, which is used for use in a direct methanol fuel cell.

13. A fuel cell separator using the separator material according to any one of Claims 1 to 12, wherein the second Au plated layer is faced to air electrode and fuel electrode sides.

14. A fuel cell stack using the fuel cell separator material according to any one of Claims 1 to 12, wherein the second Au plated layer is faced to air electrode and fuel electrode sides.
